**Europäisches Patentamt**

**European Patent Office**

**Office européen des brevets**

(19)

(11) Numéro de publication: **0 258 128**
**B1**

(12) ## FASCICULE DE BREVET EUROPEEN

(45) Date de publication du fascicule du brevet: **11.04.90**

(51) Int. Cl.⁵: **B 60 R 13/06, E 06 B 3/56**

(21) Numéro de dépôt: **87401861.7**

(22) Date de dépôt: **10.08.87**

(54) **Vitrage prévu pour le collage direct, en particulier, vitrage d'automobile.**

(30) Priorité: **13.08.86 DE 3627536**

(43) Date de publication de la demande: **02.03.88 Bulletin 88/09**

(45) Mention de la délivrance du brevet: **11.04.90 Bulletin 90/15**

(84) Etats contractants désignés:
**AT BE CH DE ES FR GB IT LI LU NL SE**

(56) Documents cités:
**EP-A-0 256 946**
**DE-A-3 409 903**
**DE-A-3 409 960**
**DE-A-3 500 205**

(73) Titulaire: **SAINT-GOBAIN VITRAGE INTERNATIONAL**
**18, avenue d'Alsace**
**F-92400 Courbevoie (FR)**

(84) **BE CH ES FR GB IT LI LU NL SE AT**

(73) Titulaire: **VEGLA Vereinigte Glaswerke GmbH**
**Viktoriaallee 3-5**
**D-5100 Aachen (DE)**

(84) **DE**

(72) Inventeur: **Kunert, Heinz, Dr.**
**Am Krieler Dom 23**
**D-5000 Köln 41 (DE)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

EP 0 258 128 B1

**Description**

La présente invention concerne un vitrage pourvu d'un cordon profilé en matière plastique de section transversale en U disposé dans sa zone marginale, en particulier un vitrage prévu pour le collage direct à l'aile de fixation d'une baie de fenêtre, pour lequel au moment de l'application du cordon d'adhésif établissant la jonction à l'aile de fixation, le cordon profilé en matière plastique disposé dans la zone marginale du vitrage forme un élément intermédiaire qui n'est plus plastiquement déformable entre le vitrage et le cordon d'adhésif.

Comme décrit dans le document DE-A-34 09 960, il est connu de munir un vitrage d'automobile prévu pour le collage direct à l'aile de fixation du cadre de fenêtre, d'un tel cordon profilé de matière plastique formant un élément intermédiaire entre le vitrage et l'aile de fixation. Dans le cas de cette réalisation connue, ce cordon profilé est fait d'une matière plastique compatible avec la matière adhésive, en particulier d'une composition identique ou semblable à celle de la matière adhésive. Ce cordon profilé est de préférence extrudé au cours d'un stade du procédé précédant le collage proprement dit, à l'aide d'une buse d'extrudeuse adéquate à partir de la matière adhésive sur la surface du verre préparée de manière adéquate. Le cordon profilé a de préférence une section transversale en forme de U, les deux ailes latérales du cordon profilé formant des ailes de limitation pour le cordon d'adhésif qui s'élargit latéralement lors de la mise en place du vitrage.

Dans ce procédé connu de pose de vitrages, qui peut être qualifié aussi de collage en deux phases, la jonction du second cordon d'adhésif avec le premier cordon profilé durci disposé sur le vitrage, est exclusivement assurée par adhérence.

L'invention a pour but de développer ce vitrage connu pourvu d'un cordon profilé d'une manière telle que ce cordon profilé puisse remplir des fonctions supplémentaires. En particulier, la qualité de la jonction entre le cordon profilé et le cordon d'adhésif devrait pouvoir être améliorée. De plus, le cordon profilé lui-même devrait offrir la possibilité de fixer des éléments de retenue ou de fixation supplémentaires.

L'invention réside dans le fait que le cordon profilé de section transversale en U collé au vitrage est pourvu de saillies d'ancrage formées par des affouillements.

La configuration conforme à l'invention du cordon profilé permet d'atteindre une série d'effets avantageux et de possibilités d'utilisation supplémentaires pour ce cordon profilé. Ainsi, d'une part, on obtient qu'indépendamment des forces d'adhérence intervenant dans un cas particulier, entre le cordon profilé et le cordon d'adhésif, s'établisse un ancrage mécanique à épousement de forme qui permet déjà le cas échéant, à lui seul, de garantir la jonction nécessaire. La solidité de la jonction est ainsi dans certaines circonstances indépendante de l'effet d'adhérence de l'adhésif sur le cordon profilé. Il est même possible de réduire volontairement l'effet d'adhérence ou même de le supprimer entièrement, par exemple par intercalation d'un agent de séparation ou par sélection des matières, sans que la solidité de la jonction en soit affectée. De cette façon, d'une part, on peut tirer profit des avantages du procédé de collage lors du montage des vitrages d'automobiles et, d'autre part, lors du démontage des vitrages, on peut éviter l'inconvénient lié au procédé de collage, qui réside dans le fait que le cordon d'adhésif doit être tranché à l'aide d'outils spéciaux. Le démontage du vitrage s'effectue plutôt dans ce cas par une simple pression repoussant le vitrage vers l'extérieur, sous l'effet de laquelle les ailes latérales du cordon profilé s'écartent par flexion l'une de l'autre et le cordon d'adhésif se détache du cordon profilé. Grâce à une configuration géométrique adéquate du cordon profilé, la solidité de la jonction, qui dans un cas extrême peut être une jonction serrée pure, peut être largement variable.

D'autre part, grâce à la configuration conforme à l'invention du cordon profilé, il est possible, par un effet de serrage, c'est-à-dire par une jonction à transfert de force et épousement de forme, de relier à ce cordon profilé toute attache, agrafe, bande profilée, moulure décorative ou analogue supplémentaire. Des possibilités supplémentaires et utiles pour le montage des vitrages dans les cadres de fenêtres d'une carrosserie d'automobile, allant dans le sens d'une simplification de l'opération de montage, sont ainsi ouvertes.

Lors du montage d'un vitrage conforme à l'invention, on procède avantageusement en extrudant le cordon d'adhésif à l'aide d'une buse d'extrudeuse sous une pression accrue dans le chenal ouvert du cordon profilé, de telle sorte que la matière adhésive remplisse l'ensemble du volume du chenal et qu'en outre, le volume d'adhésif nécessaire pour le collage fasse saillie au-dessus du cordon profilé.

Lors du montage des vitrages d'automobiles conformes à l'invention, on utilise d'une manière particulièrement avantageuse des matières adhésives qui, en durcissant, se dilatent dans une mesure déterminée. Par exemple, on peut mélanger à la matière adhésive, des agents qui assurent un faible dégagement de gaz et ainsi une faible expansion, ou une augmentation de volume par une autre forme d'action. Une jonction à épousement de forme et transfert de force particulièrement bonne peut, de cette façon, être obtenue entre le cordon d'adhésif et le cordon profilé.

D'autres avantages et particularités des vitrages conformes à l'invention ressortiront de la description suivante de plusieurs formes d'exécution, donnée avec référence aux dessins annexés, dans lesquels:

la Fig. 1 illustre une première forme d'exécution d'un collage conforme à l'invention d'un vitrage d'automobile;

la Fig. 2 illustre une deuxième forme d'exécution d'un collage conforme à l'invention d'un vitrage d'automobile;

la Fig. 3 illustre un collage conforme à l'invention d'un vitrage d'automobile avec une attache de fixation supplémentaire;

la Fig. 4 illustre un collage conforme à l'invention d'un vitrage d'automobile avec un boulon de fixation relié au cordon profilé par serrage;

la Fig. 5 illustre un collage conforme à l'invention d'un vitrage d'automobile avec un encadrement profilé enjoliveur relié au cordon profilé par serrage;

la Fig. 6 illustre un collage conforme à l'invention d'un vitrage d'automobile avec un profilé de serrage relié au cordon profilé par serrage et destiné à recevoir un profilé enjoliveur supplémentaire;

la Fig. 7 illustre un collage conforme à l'invention d'un vitrage d'automobile avec des agrafes individuelles reliées au cordon profilé par serrage et destinées à recevoir un profilé enjoliveur supplémentaire, et

la Fig. 8 est une vue fragmentaire d'un vitrage d'automobile conforme à l'invention lors de la mise en place du cordon d'adhésif.

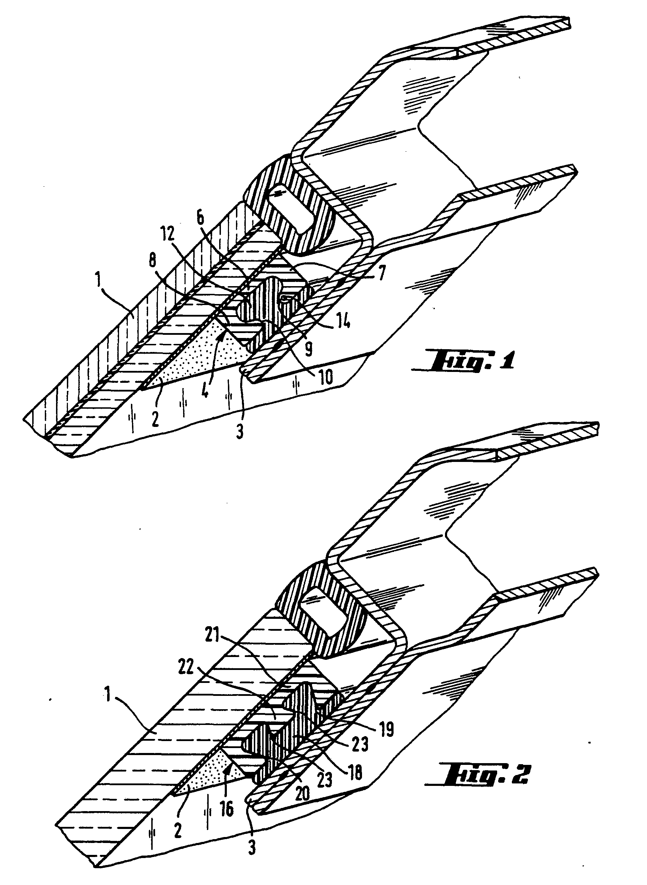

Les vitrages conformes à l'invention peuvent être essentiellement des vitrages quelconques et, en fait, tant des vitrages utilisés dans le secteur de la construction que des vitrages destinés aux véhicules. En particulier, il peut s'agir ainsi d'un pare-brise, d'une lunette arrière ou d'une glace latérale ou aussi d'un vitrage de toit et les vitrages peuvent être de n'importe quelle structure. Ainsi, le vitrage 1 de la Fig. 1 est un vitrage de sécurité feuilleté, tandis que dans les autres figures, le vitrage 1 est un vitrage de sécurité trempé.

Le long du bord du vitrage 1 est prévu un revêtement formant encadrement 2 de quelques centimètres de largeur, appliqué sur la surface tournée vers l'aile de fixation 3 du cadre de fenêtre. Ce revêtement formant encadrement 2 est de préférence constitué d'une peinture céramique à cuire opaque. Sur ce revêtement formant encadrement 2 est disposé le cordon profilé 4 ou 16 qui est collé solidement et durablement au revêtement 2.

Le cordon profilé 4 ou 16 peut essentiellement être une bande profilée préfaçonnée qui, à l'état durci, est collée au moyen d'un adhésif approprié au vitrage 1 ou au revêtement en forme d'encadrement 2. D'une manière particulièrement avantageuse, le cordon profilé 4 ou 16 est toutefois extrudé à partir d'une matière adhésive adéquate apte à l'extrusion, par exemple à partir d'un polyuréthane à un composant durcissant au contact de l'humidité ou d'une colle de réaction à deux composants à base de polyuréthane, au moyen d'une buse d'extrudeuse profilée de manière adéquate, avec la section souhaitée, directement sur le vitrage ou sur le revêtement formant encadrement 2, le cas échéant après un traitement préalable du vitrage ou du revêtement d'encadrement 2 au moyen d'un agent de nettoyage et/ou primaire adéquat. Des compositions adéquates pour des systèmes adhésifs, qui conviennent pour la fabrication du cordon profilé et pour la préparation du revêtement d'encadrement 2, sont décrites par exemple, dans le document US-A-3 779 794.

Le cordon profilé 4 représenté sur la Fig. 1 a essentiellement une section transversale en U comportant une âme médiane 6 et les deux ailes latérales 7 et 8. Les ailes latérales 7, 8 sont pourvues, dans leur zone d'extrémité, de saillies 9, 10 orientées vers l'intérieur, c'est-à-dire l'une vers l'autre. En dessous de ces saillies 9, 10, le creux en forme de chenal du cordon profilé 4 s'élargit et les saillies 9, 10 forment de cette façon les affouillements souhaités qui assurent l'ancrage mécanique du cordon d'adhésif 12. Le cordon d'adhésif 12 remplit l'ensemble du creux du cordon profilé 4, de sorte qu'entre le cordon profilé 4 et le cordon d'adhésif 12 s'établit une jonction à épousement de forme.

Si aucune mesure particulière n'est prise et si la matière plastique formant le profilé 4 est compatible avec la matière plastique formant le cordon d'adhésif 12, le cordon d'adhésif 12 s'unit au cordon profilé 4 au niveau de la surface de contact, non seulement par accrochage mécanique, mais aussi par adhérence, de sorte qu'on obtient une jonction particulièrement solide et sûre entre le cordon profilé 4 et le cordon d'adhésif 12.

Il peut cependant être souhaitable de ne pas rendre trop solide la jonction entre le cordon profilé 4 et le cordon d'adhésif 12 afin, en cas de besoin, par exemple lorsque le vitrage 1 est détruit et doit être remplacé par un nouveau vitrage, de pouvoir séparer le cordon profilé 4 du cordon d'adhésif 12. Dans ce cas, il faut que l'adhérence entre le cordon profilé 4 et le cordon d'adhésif 12 soit plus faible que l'adhérence entre le cordon profilé 4 et le vitrage 1 ou le revêtement 2, d'une part, et que l'adhérence entre le cordon d'adhésif 12 et l'aile de fixation 3, d'autre part. Pour diminuer l'adhérence entre le cordon profilé 4 et le cordon d'adhésif 12, avant d'introduire le cordon d'adhésif 12 dans le cordon profilé 4, on applique sur la surface du cordon profilé 4 un agent de séparation. En choisissant un agent de séparation adéquat, on peut ainsi réduire l'effet d'adhérence entre le cordon profilé 4 et le cordon d'adhésif 12 jusqu'à zéro, de sorte que dans ce cas, la jonction n'est établie que par accrochage mécanique. La solidité de cette jonction mécanique peut, pour sa part, être modifiée dans de larges limites par la configuration des profils.

A titre d'auxiliaire de démontage pour le vitrage 1, on peut finalement intégrer un fil de déchirure 14 dans le cordon profilé 4, de préférence dans la saillie extérieure 9 de l'aile latérale 7. Le noyage du fil de déchirure 14 dans le cordon profilé 4 peut s'effectuer conformément au procédé décrit dans le document DE-A-34 09 903. A l'aide du fil de déchirure 14, le cordon profilé 4 peut être séparé d'une manière particulièrement simple du cordon d'adhésif 12.

Dans le cas de la forme d'exécution illustrée sur la Fig. 2, le cordon profilé 16 a une forme en coupe qui permet un accrochage encore plus solide entre le cordon profilé 16 et le cordon d'adhésif 18. En plus des deux saillies intérieures 19, 20 sur les ailes latérales du cordon profilé, une autre aile 22 s'étendant dans le creux du cordon profilé, qui s'élargit de façon conique vers son extrémité en formant des saillies 23, est prévue sur l'âme médiane 21. Ces saillies 23 forment de cette façon deux autres évidements affouillés dans lesquels la matière adhésive du cordon d'adhésif 18 pénètre et augmente ainsi la solidité de la jonction à épousement de forme.

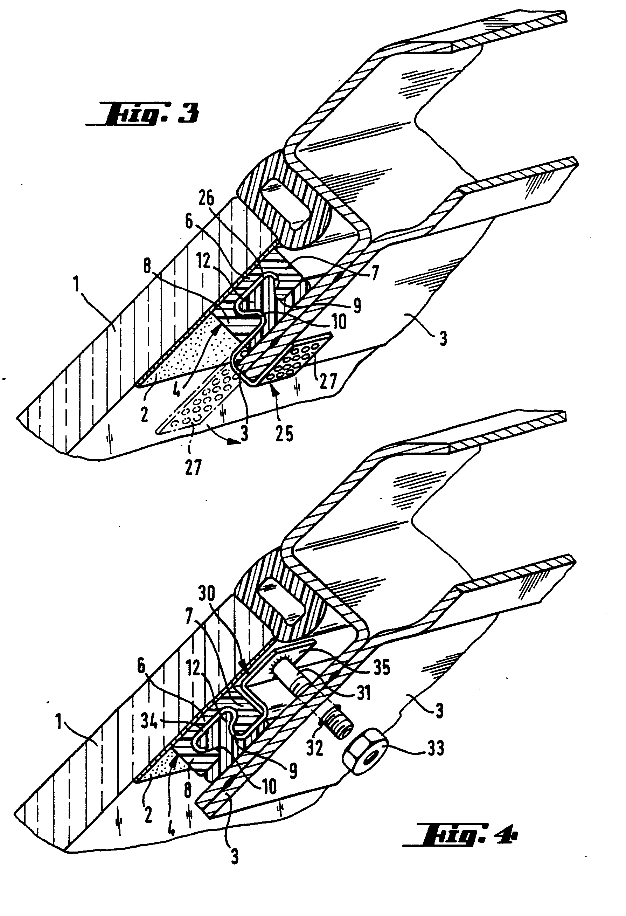

Divers exemples de réalisation sont représentés sur les Fig. 3 à 7, dans lesquelles le cordon profilé 4 conforme à l'invention sert non seulement à l'ancrage mécanique du cordon d'adhésif, mais en même temps à la fixation par serrage de diverses attaches, agrafes ou bandes profilées. La Fig. 3 illustre un premier exemple de réalisation pour la jonction par serrage d'une attache de fixation 25, qui sert à fixer le vitrage 1, après sa mise en place dans le cadre de fenêtre, pendant la période au cours de laquelle le cordon d'adhésif 12 n'est pas encore durci, en vue d'empêcher que le vitrage 1 se déplace sous l'effet de son propre poids. Les attaches de fixation 25 comportent une section de serrage rigide 26 et une section en forme de languette plastiquement déformable 27 qui, avant la mise en place du vitrage 1 dans le cadre de fenêtre, s'étend en substance parallèlement au vitrage 1. Après la mise en place du vitrage 1 dans le cadre de fenêtre et le positionnement précis, les sections en forme de languettes 27 des attaches de fixation 25, qui sont prévues en un nombre voulu le long du pourtour du vitrage, sont repliées autour de l'aile de fixation 3 du cadre de fenêtre, suite à quoi le vitrage 1 est fixé de manière souhaitée. La section de serrage 26 de l'attache de fixation est adaptée au profil intérieur du cordon profilé 4 d'une manière telle qu'il est immobilisé par les saillies d'ancrage 9, 10 dans la position souhaitée, ce qui peut être réalisé par un façonnage adéquat. Le cordon profilé durci 4 présente une déformabilité élastique suffisante, de sorte que la section de fixation 26 peut, grâce à une déflexion élastique des ailes latérales 7, 8, être pressée à l'intérieur du creux formant chenal du cordon profilé.

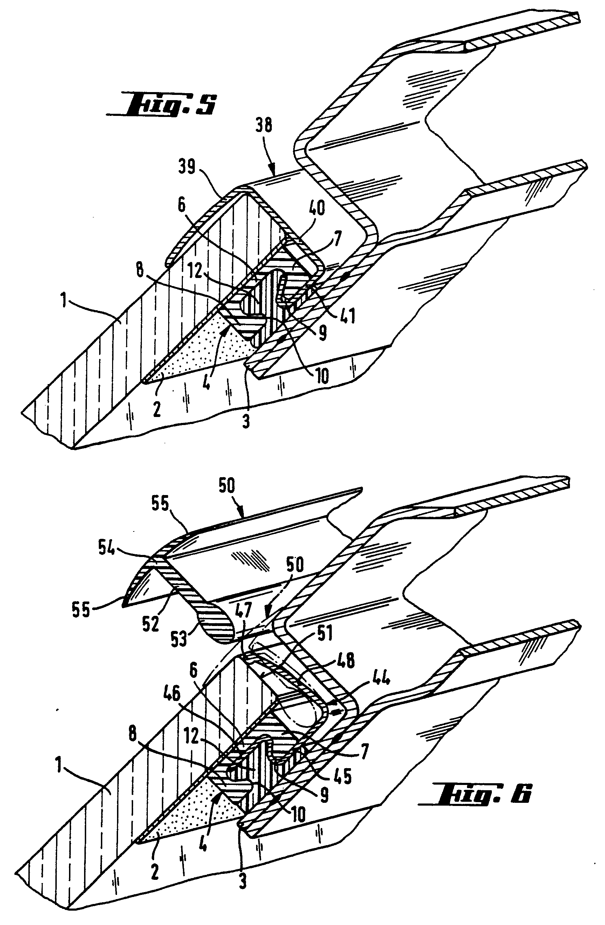

Un autre type de fixation mécanique supplémentaire du vitrage 1 à l'aile de fixation 3 du cadre de fenêtre est illustré sur la Fig. 4. Dans ce cas, une attache de fixation 30, à laquelle est fixé un goujon fileté 31 qui traverse un trou 32 dans l'aile de fixation 3 et coopère avec un écrou 33, est reliée avec épousement de forme et transfert de force au cordon profilé 4. La section de serrage 34 est à nouveau adaptée au contour intérieur de la section transversale du cordon profilé 4 et assure une jonction par serrage solide de l'attache de fixation 30 et du cordon profilé 4. A la section de serrage 34 de l'attache de fixation 30 se raccorde une section coudée 35, à laquelle le goujon 31 est relié, par exemple par soudage. Alors que dans le cas représenté, le cordon profilé 4 est décalé vers l'intérieur d'une distance d'environ 1 à 2 cm du bord du vitrage 1 et que la section coudée 35 de l'attache de fixation 30 est disposée avec le goujon 31 en dehors du cordon profilé 4, l'agencement peut bien entendu aussi être tel que le cordon profilé 4 s'étende immédiatement le long du bord du vitrage et que la section coudée 35 soit orientée vers l'intérieur du vitrage 1.

La Fig. 5 illustre une forme d'exécution, dans laquelle un profilé enjoliveur 38 formant encadrement, qui est relié par serrage au cordon profilé 4, est disposé sur le bord du vitrage 1. Le profilé enjoliveur 38 a une section transversale essentiellement en forme de U et comporte une aile latérale 39 qui chevauche le côté extérieur du vitrage 1 et qui forme l'encadrement enjoliveur effectivement visible, une âme médiane 40 appliquée sur la surface périphérique du vitrage 1 ainsi qu'une aile de fixation 41 s'appliquant sur le cordon profilé 4, qui est coudée en forme de crochet à son extrémité et dont la section coudée vers l'intérieur 42 s'accroche derrière la saillie 9 du cordon profilé 4. L'encadrement profilé enjoliveur 38 est fixé sur le bord du vitrage 1 avant que la matière adhésive 12 soit introduite dans le creux de ce cordon profilé.

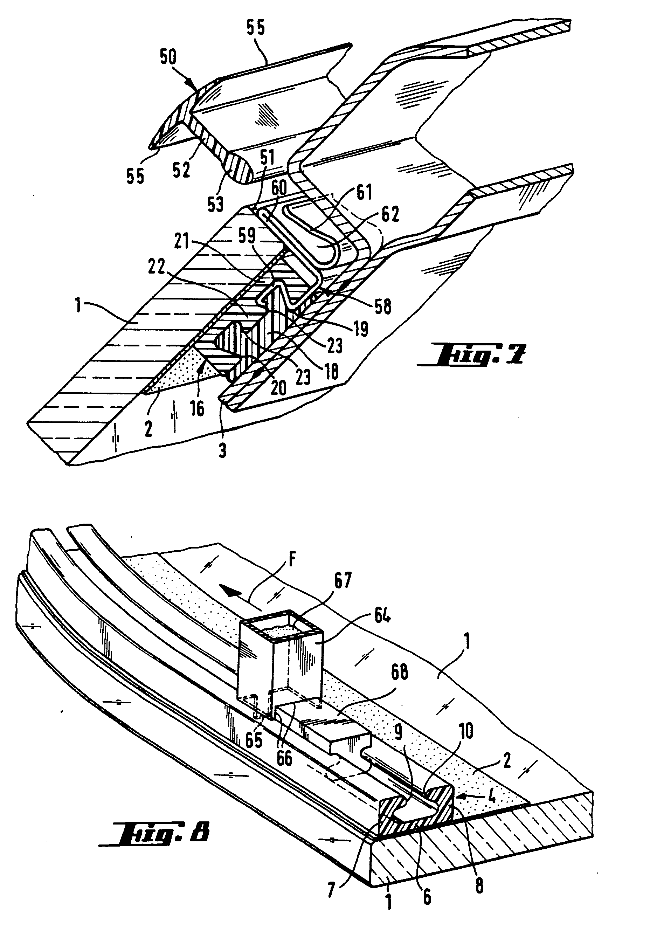

Dans la forme d'exécution représentée sur la Fig. 6, une bande profilée 44 à peu près en forme de L, en coupe, est fixée autour du vitrage 1 au cordon profilé 4 par serrage. La bande profilée 44 comporte, en coupe, une aile coudée 45 à son extrémité dont la section d'extrémité coudée 46 établit la jonction par serrage au cordon profilé 4, ainsi qu'une aile 48 qui s'applique par sa section d'extrémité 47 élastiquement contre la surface périphérique du vitrage 1. Cette bande profilée 44 est aussi fixée par serrage sur le bord du vitrage 1 avant que la matière adhésive 12 soit introduite dans le creux du cordon profilé 4 et que le vitrage soit mis en place dans la baie de fenêtre. Lorsque, après la mise en place du vitrage 1, le cordon d'adhésif 12 a durci, pour couvrir l'interstice entre la surface périphérique du vitrage 1 et le cadre de fenêtre, on peut fixer une bande profilée de section en forme de T séparée 50 dans la rainure de fixation formée par la surface périphérique 51 du vitrage 1 et l'aile 48 de la bande profilée 44. Dans ce cas, l'aile de fixation 52 est enfoncée par sa partie de base épaissie 53 dans la rainure de fixation au point que l'aile transversale supérieure 54 s'applique par ses deux lèvres d'étanchéité 55 contre la surface du verre d'une part et le cadre de fenêtre d'autre part.

Dans le cas de la forme d'exécution représentée sur la Fig. 7, en lieu et place d'une bande profilée continue pour la fixation du profilé de couverture 50, plusieurs attaches de fixation 58 sont réparties sur le pourtour du vitrage 1 et sont fixées par serrage au cordon profilé 16. Les attaches de fixation 58 présentent à nouveau une section de serrage 59 par laquelle la jonction à épousement de forme et à transfert de force des attaches de fixation 58 au cordon profilé 16 est assurée. L'attache de fixation 58 comporte une aile médiane 60 appliquée contre la surface périphérique du vitrage et une section d'extrémité 61 repliée à 180° qui forme une rainure d'insertion 62 pour l'aile 52 et la partie de base 53 de la bande profilée.

L'introduction de la matière adhésive dans le creux du cordon profilé 4 ou 16 s'effectue avantageusement sous pression à l'aide d'une buse d'extrusion 64, comme l'illustre la Fig. 8. La buse d'extrusion 64 est constituée d'un tube ouvert vers le bas qui est posé, orienté verticalement, sur le cordon profilé 4 et est déplacé dans le sens de la flèche F le long de ce cordon profilé. La buse d'extrusion 64 est pourvue au bas de sa face antérieure, d'une saillie de guidage 65 qui s'engage dans la rainure ouverte du cordon profilé 4 et est guidée par celle-ci. Sur sa face postérieure, la buse d'extrusion 64 est pourvue d'une découpe calibrée 66 par laquelle la matière adhésive 67 sort et forme un cordon d'adhésif 68 calibré. Lorsque la matière adhésive est introduite de cette façon dans le cordon profilé 4 tout le long du pourtour du vitrage 1, le vitrage ayant subi ce traitement préalable est mis en place dans le cadre de fenêtre de la carrosserie du véhicule.

## Revendications

1. Vitrage pourvu d'un cordon profile (4, 16) en matière plastique de section transversale en U disposé dans sa zone marginale, en particulier vitrage prévu pour le collage direct à l'aile (3) de fixation d'une baie de fenêtre, pour lequel au moment de l'application du cordon d'adhésif (12, 18) établissant la jonction à l'aile de fixation, le cordon profilé (4, 16) en matière plastique disposé dans la zone marginale du vitrage forme un élément intermédiaire qui n'est plus plastiquement déformable entre le vitrage (1) et le cordon d'adhésif (12, 18), caractérisé en ce que le cordon profilé de section en forme de U (4, 16) collé au vitrage est pourvu de saillies d'ancrage (9, 10, 23) formées par des affouillements.

2. Vitrage suivant la revendication 1, caractérisé en ce que les saillies d'ancrage (9, 10) sont disposées à l'extrémité des ailes latérales (7, 8) du cordon profilé (4).

3. Vitrage suivant la revendication 1 ou 2, caractérisé en ce que les saillies d'ancrage (23) sont disposées sur une languette (22) partant de l'âme médiane (21) du cordon profilé (16) et s'étendant dans le creux en forme de chenal du cordon profilé.

4. Vitrage suivant l'une quelconque des revendications 1 à 3, caractérisé en ce que le cordon profilé (4, 16) est une bande profilée qui est collée au vitrage (1), sous forme de bande profilée durcie préfaçonnée, au moyen d'un adhésif adéquat.

5. Vitrage suivant l'une quelconque des revendications 1 à 3, caractérisé en ce que le cordon profilé (4, 16) est formé d'une matière adhésive établissant une jonction durable avec le vitrage (1) ou avec un revêtement (2) disposé sur ce vitrage et est élaboré par extrusion au moyen d'une buse d'extrudeuse profilée, directement sur le vitrage (1) ou sur le revêtement (2).

6. Vitrage suivant l'une quelconque des revendications 1 à 5, caractérisé en ce que la surface du cordon profilé (4, 16) en contact avec le cordon d'adhésif (12, 18, 68) est traitée entièrement ou partiellement au moyen d'un agent améliorant l'adhérence entre le cordon profilé et le cordon d'adhésif.

7. Vitrage suivant l'une quelconque des revendications 1 à 5, caractérisé en ce que la surface du cordon profilé (4, 16) en contact avec le cordon d'adhésif (12, 18, 68) est traitée entièrement ou partiellement au moyen d'un agent augmentant ou diminuant l'adhérence entre le cordon profilé et le cordon d'adhésif.

8. Vitrage suivant l'une quelconque des revendications 1 à 7, caractérisé par des attaches de fixation (25) en métal plastiquement déformable pouvant être insérées dans le creux en forme de chenal du cordon profilé (4) et formant une jonction à transfert de force et épousement de forme avec ce cordon profilé (4) afin de fixer le vitrage pendant la phase de durcissement du cordon d'adhésif (12).

9. Vitrage suivant l'une quelconque des revendications 1 à 7, caractérisé par des attaches de fixation (30), de préférence en métal, pouvant être insérées dans le creux formant chenal du cordon profilé (4) et établissant une jonction à transfert de force et épousement de forme avec le cordon profilé (4), attaches (30) qui sont pourvues d'un boulon de fixation (31) en vue de réaliser une jonction vissée ou serrée avec l'aile de fixation (3) du cadre de fenêtre.

10. Vitrage suivant l'une quelconque des revendications 1 à 9, caractérisé par un cordon profilé enjoliveur (38) en forme de cadre enserrant le bord du vitrage, ce cadre enjoliveur (38) pouvant être inséré dans le creux en forme de chenal du cordon profilé (4) et qui forme une jonction à épousement de forme et transfert de force avec ce cordon profilé (4).

11. Vitrage suivant l'une quelconque des revendications 1 à 9, caractérisé par une bande profilée (44) de section transversale essentiellement en L pouvant être insérée dans le creux en forme de chenal du cordon profilé (4) et établissant avec celui-ci une jonction à transfert de force et épousement de forme, dont l'aile (48) qui s'étende parallèlement à la surface de pourtour (51) du vitrage (1) forme, avec la surface de pourtour (51) du vitrage, une rainure d'insertion pour l'aile de fixation (52, 53) d'un profilé enjoliveur à insérer (50).

12. Vitrage suivant l'une quelconque des revendications 1 à 9, caractérisé par des attaches de fixation (58) pouvant être insérées dans le creux en forme de chenal du cordon profilé (4) et formant avec celui-ci une jonction à transfert de force et épousement de forme, dont les sections (60) qui s'étendent parallèlement à la surface de pourtour (51) du vitrage (1) présentent une section d'extrémité (61) repliée qui forme une rainure d'insertion (62).

13. Vitrage suivant l'une quelconque des revendications 1 à 12, caractérisé en ce que le cordon profilé (4, 16) est fait d'une composition de polyuréthane à un composant durcissant au contact de l'humidité.

14. Vitrage suivant l'une quelconque des revendications 1 à 12, caractérisé en ce que le cordon profilé (4, 16) est fait d'un mélange de réaction à deux composants donnant par réaction un polyuréthanne.

15. Procédé pour coller un vitrage suivant l'une quelconque des revendications 1 à 14, dans un cadre de fenêtre, caractérisé en ce qu'on utilise pour le cordon d'adhésif (12, 18, 68), une matière adhésive dont le volume augmente à l'intérieur du creux du cordon profilé (4, 16).

16. Procédé suivant la revendication 15, caractérisé en ce qu'on mélange la matière adhésive formant le cordon d'adhésif (12, 18, 68) avec un additif assurant une légère expansion.

**Patentansprüche**

1. Glasscheibe mit einem in ihrem Randbereich angeordneten einen U-förmigen Querschnitt aufweisenden Profilstrang (4, 16) aus Kunststoff, insbesondere für die Direktverklebung mit dem Befestigungssteg (3) einer Fensteröffnung vorgesehene Glasscheibe, wobei im Zeitpunkt des Aufbringens des die Verbindung mit dem Befestigungssteg herstellenden Kleberstrangs (12, 18) der im Randbereich der Glasscheibe angeordnete Profilstrang (4, 16) aus Kunststoff einen nicht mehr plastisch verformbaren Zwischenkörper zwischen der Glasscheibe (1) und dem Kleberstrang (12, 18) bildet, dadurch gekennzeichnet, daß der mit der Glasscheibe verklebte im Querschnitt U-förmig ausgebildete Profilstrang (4, 16) mit von Hinterschneidungen gebildeten Verankerungsvorsprüngen (9, 10, 23) versehen ist.

2. Glasscheibe nach Anspruch 1, dadurch gekennzeichnet, daß die Verankerungsvorsprünge (9, 10) am Ende der Seitenstege (7, 8) des Profilstrangs (4) angeordnet sind.

3. Glasscheibe nach Anspruch 1 oder 2, dadurch gekennzeichnet, daß die Verankerungsvorsprünge (23) an einem von dem Mittelsteg (21) des Profilstrangs (16) ausgehenden, in den kanalförmigen Hohlraum des Profilstrangs hineinreichenden Steg (22) angeordnet sind.

4. Glasscheibe nach einem der Ansprüche 1 bis 3, dadurch gekennzeichnet, daß der Profilstrang (4, 16) ein Profilstreifen ist, der als vorgeformter ausgehärteter Profilstreifen mittels eines geeigneten Klebers mit der Glasscheibe (1) verklebt ist.

5. Glasscheibe nach einem der Ansprüche 1 bis 3, dadurch gekennzeichnet, daß der Profilstrang (4, 16) aus einer mit der Glasscheibe (1) bzw. mit einem auf der Glasscheibe (1) angeordneten Belag (2) eine dauerhafte Klebeverbindung eingehenden Klebemasse besteht und durch Extrusion mit Hilfe einer profilierten Extruderdüse unmittelbar auf der Glasscheibe (1) bzw. auf dem Belag (2) hergestellt ist.

6. Glasscheibe nach einem der Ansprüche 1 bis 5, dadurch gekennzeichnet, daß die in Kontakt mit dem Kleberstrang (12, 18, 68) stehende Oberfläche des Profilstrangs (4, 16) ganz oder teilweise mit einem die Adhäsion zwischen Profilstrang und Kleberstrang verbessernden Mittel behandelt ist.

7. Glasscheibe nach einem der Ansprüche 1 bis 5, dadurch gekennzeichnet, daß die in Kontakt mit dem Kleberstrang (12, 18, 68) stehende Oberfläche des Profilstrangs (4, 16) ganz oder teilweise mit einem die Adhäsion zwischen Profilstrang und Kleberstrang erhöhendenden oder verringernden Mittel behandelt ist.

8. Glasscheibe nach einem oder mehreren der Ansprüche 1 bis 7, gekennzeichnet durch in den kanalförmigen Hohlraum des Profilstrangs (4) einsetzbare und mit dem Profilstrang (4) eine kraft- und formschlüssige Verbindung bildende Befestigungslaschen (25) aus plastisch verformbarem Metall zur Fixierung der Glasscheibe während der Aushärtephase des Kleberstrangs (12).

9. Glasscheibe nach einem der Ansprüche 1 bis 7, gekennzeichnet durch in den kanalförmigen Hohlraum des Profilstrangs (4) einsetzbare und mit dem Profilstrang (4) eine kraft- und formschlüssige Verbindung bildende Befestigungsklammern (30) vorzugsweise aus Metall, die mit einem Befestigungsbolzen (31) für eine Schraub- oder Klemmverbindung mit dem Befestigungssteg (3) des Fensterrahmens versehen sind.

10. Glasscheibe nach einem der Ansprüche 1 bis 9, gekennzeichnet durch einen in den kanalförmigen Hohlraum des Profilstrangs (4) einsetzbaren und mit dem Profilstrang (4) eine kraft- und formschlüssige Verbindung herstellenden, die Glasscheibenkante umfassenden rahmenartigen Zierprofilstrang (38).

11. Glasscheibe nach einem der Ansprüche 1 bis 9, gekennzeichnet durch einen in den kanalförmigen Hohlraum des Profilstrangs (4) einsetzbaren und mit diesem kraft- und formschlüssige Verbindung herstellenden Profilstreifen (44) mit im wesentlichen L-förmigem Querschnitt, dessen parallel zur Umfangsfläche (51) der Glasscheibe (1) verlaufender Schenkel (48) zusammen mit der Umfangsfläche (51) der Glasscheibe eine Einstecknut für den Befestigungssteg (52, 53) eines Einsteck-Zierprofils (50) bildet.

12. Glasscheibe nach einem der Ansprüche 1 bis 9, gekennzeichnet durch in den kanalförmigen Hohlraum des Profilstrangs (4) einsetzbare und mit diesem eine kraft- und formschlüssige Verbindung herstellende Befestigungsklammern (58), deren parallel zur Umfangsfläche (51) der Glasscheibe (1) verlaufende Abschnitte (60) einen umgefalteten, eine Einstecknut (62) bildenden Endabschnitt (61) aufweisen.

13. Glasscheibe nach einem der Ansprüche 1 bis 12, dadurch gekennzeichnet, dass der Profilstrang (4, 16) aus einer feuchtigkeitshärtenden Einkomponenten-Polyurethanzusammensetzung hergestellt ist.

14. Glasscheibe nach einem der Ansprüche 1 bis 12, dadurch gekennzeichnet, dass der Profilstrang (4, 16) aus einer zu einem Polyurethan ausreagierenden Zweikomponenten-Reaktionsmischung hergestellt ist.

15. Verfahren zum Einkleben einer Glasscheibe nach einem der Ansprüche 1 bis 14 in einen Fensterrahmen, dadurch gekennzeichnet, dass für den Kleberstrang (12, 18, 68) eine innerhalb des Hohlraums des Profilstrangs (4, 16) ihr Volumen vergrößernde Klebermasse verwendet wird.

16. Verfahren nach Anspruch 15, dadurch gekennzeichnet, daß der den Kleberstrang (12, 18, 68) bildenden Klebermasse ein ein leichtes Aufschäumen bewirkender Zusatz beigemischt ist.

**Claims**

1. Glazing provided with a profiled strand (4, 16) made from a plastics material and having a U-shaped cross-section placed in its marginal zone, in particular a glazing for direct bonding to the fixing flange (3) of a window opening, for which at the time of the application of the adhesive bead (12, 18) establishing the junction with the fixing flange, the plastics material profiled strand (4, 16) located in the marginal zone of the glazing forms an intermediate element, which is no longer plastically deformable between the glazing (1) and the adhesive bead (12, 18), characterized in that the U-shaped profiled strand (4, 16) bonded to the glazing is provided with anchoring projections (9, 10, 23) formed by cavities.

2. Glazing according to claim 1, characterized in that the anchoring projections (9, 10) are located at the end of the lateral flanges (7, 8) of the profiled strand (4).

3. Glazing according to claims 1 or 2, characterized in that the anchoring projections (23) are located on a tongue (22) passing from the median web (21) of the profiled strand (16) and extending into the channel-shaped hollow of the profiled strand.

4. Glazing according to one of the claims 1 to 3, characterized in that the profiled strand (4, 16) is a profiled strip, which is bonded to the glazing (1), in the form of a preshaped, hardened, profiled strip, by means of an adequate adhesive.

5. Glazing according to one of the claims 1 to 3, characterized in that the profiled strand (4, 16) is formed from an adhesive material establishing a durable junction with the glazing (1) or with a covering (2) located on said glazing and is produced by extrusion using a profiled extruding nozzle directly onto the glazing (1) or covering (2).

6. Glazing according to one of the claims 1 to 5, characterized in that the surface of the profiled strand (4, 16) in contact with the adhesive bead (12, 18, 68) is entirely or partly treated by means of an agent improving adhesion between the profiled strand and the adhesive bead.

7. Glazing according to one of the claims 1 to 5, characterized in that the surface of the profiled strand (4, 16) in contact with the adhesive bead (12, 18, 68) is entirely or partly treated by means of an agent increasing or decreasing the adhesion between the profiled strand and the adhesive bead.

8. Glazing according to one of the claims 1 to 7, characterized by plastically deformable, metal fixing attachments (25), which can be inserted into the channel-shaped hollow of the profiled strand (4) and which form a force transfer junction and adapt to the shape of the profiled strand (4), in order to fix the glazing during the hardening phase of the adhesive bead (12).

9. Glazing according to one of the claims 1 to 7, characterized by preferably metal fixing attachments (30), which can be inserted in the channel-shaped hollow of the profiled strand (4) and establish a force transfer junction, adapting to the shape of the profiled strand (4), said attachments (30) being provided with a fixing bolt (31) for forming a screwed or locked junction with the fixing flange (3) of the window frame.

10. Glazing according to one of the claims 1 to 9, characterized by an embellishment profiled strand (38) in frame-like form surrounding the edge of the glazing, said embellishment frame (38) being inserted in the channel-shaped hollow of the profiled strand (4) and forming a shape adapting and force transferring junction with the profiled strand (4).

11. Glazing according to one of the claims 1 to 9, characterized by a profiled strip (44) having an essentially L-shaped cross-section, which can be inserted in the channel-shaped hollow of the profiled strand (4) and establishes therewith a shape adapting, force transferring junction, whose flange (48) extending parallel to the peripheral surface (51) of the glazing (1) forms, with the peripheral surfaces (51) of the glazing, an insertion groove for the fixing flange (52, 53) of an embellishment profile to be inserted (50).

12. Glazing according to one of the claims 1 to 9, characterized by fixing attachments (58), which can be inserted in the channel-shaped hollow of the profiled strand (4) and form with the latter a shape adapting, force transferring junction, whose section (60) extending parallel to the peripheral surface (51) of the glazing (1) have a bent end section (61) forming an insertion groove (62).

13. Glazing according to one of the claims 1 to 12, characterized in that the profiled strand (4, 16) is formed from a polyurethane composition having a component hardening on contact with moisture.

14. Glazing according to one of the claims 1 to 12, characterized in that the profiled strand (4, 16) is formed from a reaction mixture of two components giving a polyurethane by reaction.

15. Process for bonding a glazing according to any one of the claims 1 to 14 in a window frame, characterized in that the adhesive bead (12, 18, 68) is formed by an adhesive material, whose volume increases within the hollow of the profiled strand (4, 16).

16. Process according to claim 15, characterized in that the adhesive material forming the adhesive bead (12, 18, 68) is mixed with an adhesive ensuring a slight expansion.

Fig. 1

Fig. 2

*Fig. 3*

26
6
8
12
1
7
9
10
3
2
4
27
3
25
27

*Fig. 4*

30
7
6
12
1
34
35
31
3
9
32
33
8
10
2
4
3

*Fig. 5*

*Fig. 6*

3

_Fig. 7_

_Fig. 8_